# EUROPEAN PATENT APPLICATION

(11) **EP 4 550 709 A1**
(43) Date of publication of application: **07.05.2025**
(21) Application number: 22948623.8
(22) Date of filing: 30.06.2022
(51) Int. Cl.: H04L 5/00, H04W 72/04

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: ZHANG, Yi, Dongguan, Guangdong 523860 (CN); XU, Jing, Dongguan, Guangdong 523860 (CN); LIANG, Bin, Dongguan, Guangdong 523860 (CN); LIN, Yanan, Dongguan, Guangdong 523860 (CN)
(74) Representative: RGTH
(86) International application number: PCT/CN2022/103148
(87) International publication number: WO 2024/000521

(57) **Abstract**

This present application relates to a communication method and a device, the method including: transmitting, by a first device, a plurality of signals/channels according to first information corresponding to each signal/channel in the plurality of signals/channels; where signal/channel types corresponding to the plurality of signals/channels include at least one of: a signal/channel type used for sensing; a signal/channel type used for communication; or a signal/channel type used for communication and sensing. This present application may avoid conflicts between various signals/channels.

## Description

### TECHNICAL FIELD

Embodiments of the present application relate to the field of communications, and in particular, to a communication method and a device.

### BACKGROUND

In a communication system, multiple signals/channels are required to be transmitted sometimes; how to realize conflict resolution between the multiple signals/channels is a technical problem that needs to be solved.

### SUMMARY

The embodiments of the present application provide a communication method, which may avoid conflicts between various signals/channels.

In a first aspect, the embodiments of the present application provide a communication method, which includes:
transmitting, by a first device, multiple signals/channels according to first information corresponding to each signal/channel in the multiple signals/channels; where signal/channel types corresponding to the multiple signals/channels include at least one of:
a signal/channel type used for sensing;
a signal/channel type used for communication; or
a signal/channel type used for communication and sensing.

In a second aspect, the embodiments of the present application provide a communication method, which includes:
receiving, by a second device, multiple signals/channels, the multiple signals/channels being transmitted according to first information corresponding to each signal/channel in the multiple signals/channels; where signal/channel types corresponding to the multiple signals/channels include at least one of:
a signal/channel type used for sensing;
a signal/channel type used for communication; or
a signal/channel type used for communication and sensing.

In a third aspect, the embodiments of the present application provide a device, which includes:
a transmission module, configured to transmit multiple signals/channels according to first information corresponding to each signal/channel in the multiple signals/channels; where signal/channel types corresponding to the multiple signals/channels include at least one of:
a signal/channel type used for sensing;
a signal/channel type used for communication; or
a signal/channel type used for communication and sensing.

In a fourth aspect, the embodiments of the present application provide a device, which includes:
a receiving module, configured to receive multiple signals/channels, the multiple signals/channels being transmitted according to first information corresponding to each signal/channel in the multiple signals/channels; where signal/channel types corresponding to the multiple signals/channels include at least one of:
a signal/channel type used for sensing;
a signal/channel type used for communication; or
a signal/channel type used for communication and sensing.

In a fifth aspect, the embodiments of the present application provide a device, which includes a processor and a memory. The memory is configured to store a computer program, and the processor is configured to call and run the computer program stored in the memory, to enable the device to perform the communication method described in the first aspect or the second aspect above.

In a sixth aspect, the embodiments of the present application provide a chip, configured to implement the communication method described in the first aspect or the second aspect above.

Specifically, the chip includes: a processor, configured to call a computer program from a memory and run the computer program, to enable a device installed with the chip to perform the communication method described in the first aspect or the second aspect above.

In a seventh aspect, the embodiments of the present application provide a computer-readable storage medium. The computer-readable storage memdium is configured to store a computer program, and the computer program, when being run by a device, enables the device to perform the communication method described in the first aspect or the second aspect above.

In an eighth aspect, the embodiments of the present application provide a computer program product, including computer program instructions, and the computer program instructions enable a computer to perform the communication method described in the first aspect or the second aspect above.

In a ninth aspect, the embodiments of the present application provide a computer program, and the computer program, when being run by a computer, enables the computer to perform the communication method described in the first aspect or the second aspect above.

In the embodiments of the present application, the first device transmits the multiple signals/channels according to the first information corresponding to each signal/channel in the multiple signals/channels, which may avoid transmission conflicts between various signals/channels.

### BRIEF DESCRIPTION OF THE DRAWINGS

FIG. 1 is a schematic diagram of an application scenario, in accordance with embodiments of the present application.
FIGS. 2A to 2H are schematic diagrams of sensing modes, respectively.
FIG. 3A is a schematic diagram of a feedback/report link of measurement results/sensing results.
FIG. 3B is a schematic diagram of a feedback/report link of measurement results/sensing results.
FIG. 4 is a schematic flowchart of a communication method 400, in accordance with an embodiment of the present application.
FIG. 5 is a schematic flowchart of a communication method 500, in accordance with an embodiment of the present application.
FIG. 6 is a schematic block diagram of a device 600, in accordance with an embodiment of the present application.
FIG. 7 is a schematic block diagram of a device 700, in accordance with an embodiment of the present application.
FIG. 8 is a schematic structural diagram of a device 800, in accordance with an embodiment of the present application.
FIG. 9 is a schematic block diagram of a chip 900, in accordance with embodiments of the present application.
FIG. 10 is a schematic block diagram of a communication system 1000, in accordance with embodiments of the present application.

### DETAILED DESCRIPTION

Technical solutions in the embodiments of the present application will be described below with reference to the accompanying drawings of the embodiments of the present application.

The technical solutions in the embodiments of the present application may be applied to various communication systems, such as a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an NR system evolution system, an LTE on unlicensed spectrum (LTE-U) system, an NR-based access to unlicensed spectrum (NR-U) system, a non-terrestrial Networks (NTN) system, a universal mobile telecommunication system (UMTS), a wireless local area networks (WLAN), a wireless fidelity (WiFi) system, a 5th-generation (5G) communicationsystem, a 6th-generation (6G) communication system or other communication systems.

Generally speaking, traditional communication systems support a limited number of connections, which are also easy to implement. However, with the development of communication technology, mobile communication systems will not only support traditional communications, but will also support, for example, device to device (D2D) communication, machine to machine (M2M) communication, machine type communication (MTC), vehicle to vehicle (V2V) communication, or vehicle to everything (V2X) communication, or internet of things (IoT) communication. The embodiments of the present application may also be applied to these communication systems.

In an implementation, the communication system in the embodiments of the present application may be applied to a carrier aggregation (CA) scenario, a dual connectivity (DC) scenario, a standalone (SA) networking (or network) scenario, and a non-standalone (NSA) networking (or network) scenario.

In an implementation, the communication system in the embodiments of the present application may be applied to an unlicensed spectrum, where the unlicensed spectrum may also be considered as a shared spectrum; or the communication system in the embodiments of the present application may also be applied to an licensed spectrum, where the licensed spectrum may also be considered as an unshared spectrum.

The embodiments of the present application describe various embodiments in conjunction with a network device and a terminal device, where the terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, a user device, or the like.

The terminal device may be a station (STATION, ST) in the WLAN, which may be a cellular phone, a cordless phone, a session initiation protocol (SIP) phone, a wireless local loop (WLL) station, a personal digital assistant (PDA) device, a handheld device with a wireless communication function, a computing device or other processing devices connected to a wireless modem, a vehicle-mounted device, a wearable device, a terminal device in a next-generation communication system (such as in an NR network), a terminal device in a public land mobile network (PLMN) network evolved in the future, or the like.

In the embodiments of the present application, the terminal device may be deployed on land, which includes indoor or outdoor, in handheld, worn or vehicle-mounted, which may also be deployed on water (e.g., on a ship), and may also be deployed in the air (e.g., on an airplane, a balloon, and a satellite).

In the embodiments of the present application, the terminal device may be a mobile phone, a pad, a computer with a wireless transceiving function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, or the like.

As an example but not a limitation, in the embodiments of the present application, the terminal device may also be a wearable device. The wearable device, which is also referred to as a wearable smart device, is a generic term for a device that can be worn, into which the daily wear is intelligently designed and developed by applying wearable technologies, such as glasses, gloves, watches, clothing, and shoes. The wearable device is a portable device that is worn directly on the body, or integrated into the user's clothing or accessories. The wearable device is not just a hardware device, but also implements powerful functions through software supporting, data interaction, and cloud interaction. In a broad sense, wearable smart devices include those that are fully functional, large in size, and may implement complete or partial functions without relying on smartphones, such as smart watches or smart glasses, as well as those that only focus on a certain type of application function and need to be used in conjunction with other devices (such as smartphones), such as various smart bracelets and smart jewelry for physical sign monitoring.

In the embodiments of the application, the network device may be a device used for communicating with a mobile device. The network device may be an access point (AP) in the WLAN, a base station (Base Transceiver Station, BTS) in the GSM or CDMA, which may also be a base station (NodeB, NB) in the WCDMA, and may also be an evolutional base station (evolutional Node B, eNB or eNodeB) in the LTE, a relay station or access point, a vehicle-mounted device, a wearable device, a network device (generation NodeB, gNB) in an NR network, a network device in the PLMN network evolved in the future, a network device in the NTN network, or the like.

As an example but not a limitation, in the embodiments of the present application, the network device may have a mobile characteristic, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may also be a base station provided on land, water, and other places.

In the embodiments of the present application, the network device may provide a service for a cell, and the terminal device communicates with the network device through a transmission resource (such as a frequency domain resource, or a frequency spectrum resource) used by the cell. The cell may be a cell corresponding to the network device (such as the base station), the cell may belong to a macro base station or may also belong to a base station corresponding to a small cell, and small cells here may include: a metro cell, a micro cell, a pico cell, a femto cell, etc, these small cells have characteristics of small coverage range and low transmission power, which are applicable for providing a data transmission service with high speed.

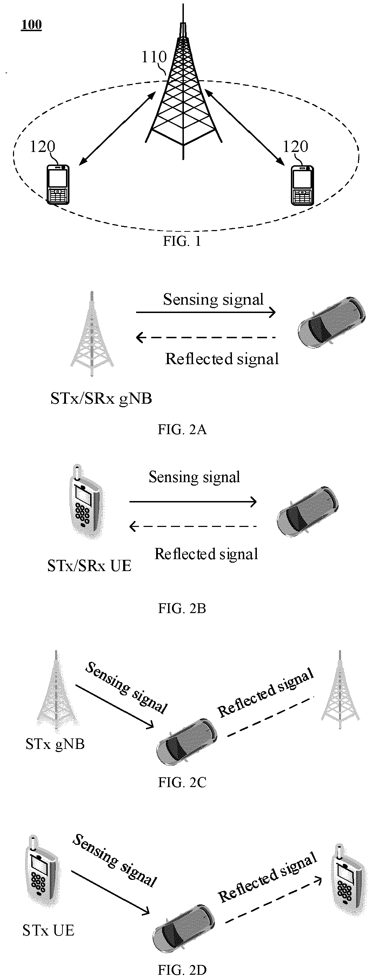

FIG. 1 exemplarily shows a communication system 100. The communication system includes one network device 110 and two terminal devices 120. In an implementation, the communication system 100 may include multiple network devices 110, and there may be another number of terminal devices 120 within a coverage range of each network device 110, which is not limited in the embodiments of the present application.

In an implementation, the communication system 100 may further include other network entities such as a mobility management entity (MME) and an access and mobility management function (AMF), which is not limited in the embodiments of the present application.

Here, network devices may include an access network device and a core network device. That is, the wireless communication system further includes multiple core networks for communicating with the access network devices. The access network device may be an evolutional node B (eNB or e-NodeB), a macro base station, a micro base station (also called a "small base station"), a pico base station, an access point (AP), or a transmission point (TP) in a long-term evolution (LTE) system, a next-generation (mobile communication system) (next radio, NR) or an authorized auxiliary access long-term evolution (LAA-LTE) system, or a new-generation Node B (gNodeB).

It should be understood that, in the embodiments of the present application, a device with a communication function in the network/system may be referred to as a communication device. Taking the communication system shown in FIG. 1 as an example, communication devices may include the network device and the terminal device with the communication function, and the network device and the terminal device may be specific devices in the embodiments of the present application, which will not be described in detail here; the communication devices may further include other devices in the communication system, such as a network controller, a mobility management entity, and other network entities, which are not limited in the embodiments of the present application.

It should be understood that the terms "system" and "network" are often used interchangeably herein. Herein, the term "and/or" is only an association relationship to describe associated objects, which means that there may be three kinds of relationships. For example, A and/or B may represent three cases that: A exists alone, both A and B exist, and B exists alone. In addition, a character "/" herein generally means that related objects before and after "/" are in an "or" relationship.

It should be understood that "indicat" mentioned in the embodiments of the present application may mean a direct indication, may mean an indirect indication, or may represent that there is an association relationship. For example, A indicates B, which may mean that A directly indicates B, for example, B may be obtained by A; or may mean that A indirectly indicates B, for example, A indicates C, and B may be obtained by C; or may mean that there is an association relationship between A and B.

In the description of the embodiments of the present application, the term "correspond" may mean that there is a direct correspondence or indirect correspondence between two, or it may mean that there is an associated relationship between the two, or it may mean a relationship of indicating and being indicated or a relationship of configuring and being configured, etc.

In order to facilitate understanding of the technical solutions of the embodiments of the present application, the relevant technologies of the embodiments of the present application are described below. The following related technologies may be arbitrarily combined with the technical solutions of the embodiments of the present application as optional solutions, and they all fall within the protection scope of the embodiments of the present application.

Wireless communication and sensing are two important applications of modern radio frequency technology. Sensing detects parameters of physical environment by using radio waves to implement environmental sensing such as target positioning, action recognition, and imaging. Traditional sensing and wireless communication exist independently, and the separated design has a waste of wireless spectrum and hardware resources. Entering the B5G (Beyond 5G) and 6G era, the communication spectrum has moved towards millimeter wave, terahertz, and visible light communication. In the future, the spectrum of wireless communication will overlap with the traditional sensing spectrum. The communication-sensing integration technology integrates the two functions of wireless communication and sensing, which may implement the sensing function by using the wireless resources of wireless communication; which may implement sensing services in a larger range by using the widely deployed cellular networks; which may perform joint sensing by using a base station and multiple terminals, so as to implement higher sensing accuracy; and which may implement sensing functions by reusing hardware modules of wireless communication, reducing costs. In short, the communication-sensing integration technology enables future wireless communication systems to have sensing capabilities, providing a foundation for the development of future smart transportation, smart cities, smart factories, drones and other businesses.

For sensing, there may be 8 modes as shown in FIG. 2A to FIG. 2H.

Mode 1 shown in FIG. 2A is a base station self-transmitting and self-receiving sensing. A transmitting node of a signal/channel used for sensing (hereinafter referred to as a sensing signal/channel) is a base station (e.g., gNB). After the base station transmits a sensing signal, the sensing signal is reflected by a sensed target (e.g., a vehicle shown in FIG. 2A), and a reflected signal returns to the base station (which may also be considered that the sensing signal returns to the base station). The base station is both a transmitting node and a receiving node of the sensing signal/channel. The signal/channel described in the embodiments of the present application may also be referred to as a channel/signal.

Mode 2 as shown in FIG. 2B is a terminal self-transmitting and self-receiving sensing. A transmitting node of a sensing signal/channel is the terminal device. After the terminal device transmits a sensing signal, the sensing signal is reflected by a sensed target (e.g., a vehicle shown in FIG. 2B), and a reflected signal returns to the terminal device (which may also be considered that the sensing signal returns to the terminal device). The terminal device is both a transmitting node and a receiving node of the sensing signal/channel.

Mode 3 shown in FIG. 2C is a base station collaborative sensing. A transmitting node of a sensing signal/channel is a base station (e.g., gNB). After the base station transmits a sensing signal, the sensing signal is reflected by a sensed target (e.g., a vehicle shown in FIG. 2C), and a reflected signal is transmitted to another base station (which may also be considered that the sensing signal is transmitted to another base station). The another base station is a receiving node of the sensing signal/channel.

Mode 4 as shown in FIG. 2D is a terminal collaborative sensing. A transmitting node of a sensing signal/channel is a terminal device. After the terminal device transmits a sensing signal, the sensing signal is reflected by a sensed target (e.g., a vehicle shown in FIG. 2D), and a reflected signal is transmitted to another terminal device (which may also be considered that the sensing signal is transmitted to another terminal device). The another terminal device is a receiving node of the sensing signal/channel.

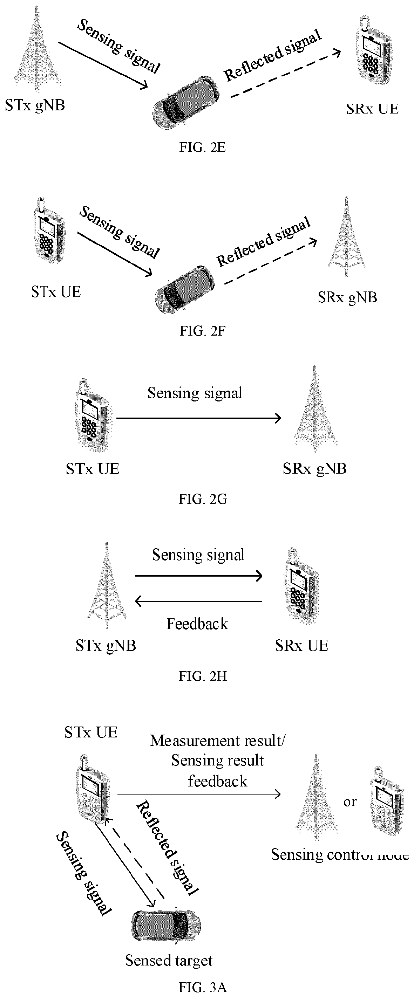

Mode 5 as shown in FIG. 2E is a base station-terminal collaborative sensing. A transmitting node of a sensing signal/channel is a base station (e.g., gNB). After the base station transmits a sensing signal, the sensing signal is reflected by a sensed target (e.g., a vehicle shown in FIG. 2E), and a reflected signal is transmitted to the terminal device (which may also be considered that the sensing signal is transmitted to the terminal device). The terminal device is a receiving node of the sensing signal/channel.

Mode 6 as shown in FIG. 2F is a terminal-base station collaborative sensing. A transmitting node of a sensing signal/channel is the terminal device. After the terminal device transmits a sensing signal, the sensing signal is reflected by a sensed target (e.g., a vehicle shown in FIG. 2F), and a reflected signal is transmitted to the base station (which may also be considered that the sensing signal is transmitted to the base station). The base station is a receiving node of the sensing signal/channel.

In Mode 7 as shown in FIG. 2G, a sensed target is a transmitting node of a sensing signal/channel. For example, the terminal device, as the sensed target, transmits a sensing signal to a base station (e.g., gNB), and the base station (e.g., gNB) receives the sensing signal and senses the terminal device.

In Mode 8 as shown in FIG. 2H, a sensed target is a receiving node of a sensing signal/channel. For example, a base station (e.g., gNB) transmits a sensing signal, and a terminal device is a receiving node of the sensing signal/channel. After receiving the sensing signal, the terminal device transmits a feedback signal (Feedback) to the base station.

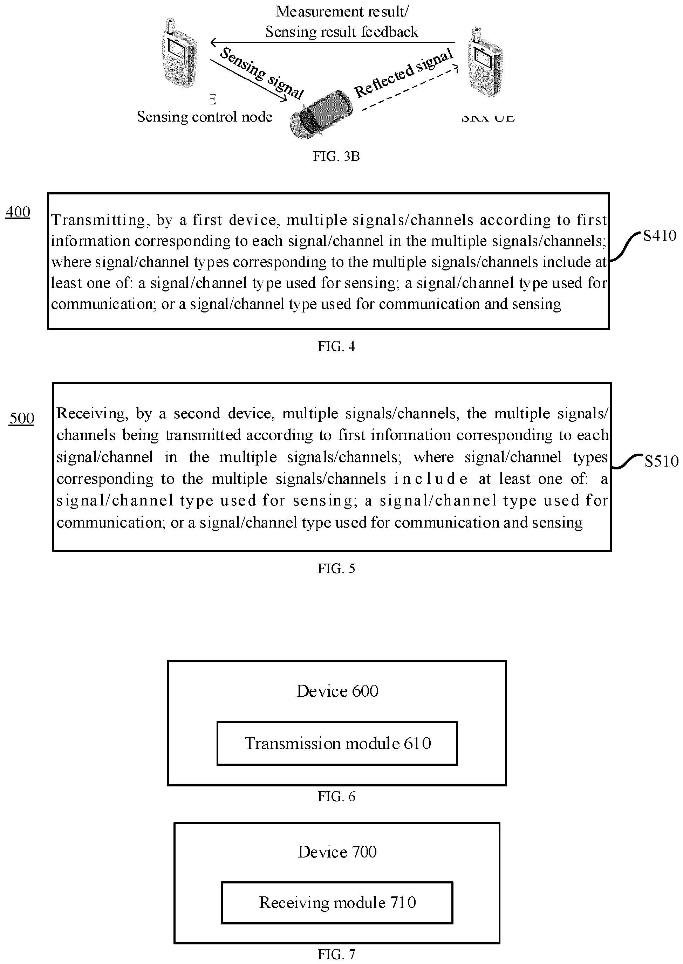

After the receiving node of the sensing signal/channel receives the sensing signal or the reflected/refracted signal of the sensing signal, there are two implementations: in an implementation method, the receiving node of the sensing signal/channel reports (processed or unprocessed) measurement results/sensing results to the sensing control node or the transmitting node of the sensing signal/channel, and in this method, a feedback/report link of the measurement results/sensing results is further required, as shown in FIG. 3A and FIG. 3B; and in another implementation method, the receiving node of the sensing signal/channel directly processes the measurement results/sensing results, and in this method, there is no need to feedback the measurement results/sensing results.

In the research on wireless communication-sensing integration, the communication system is required to have both wireless communication and sensing functions. For example, in this system, three types of signals/channels may appear: a first signal/channel group, the first signal/channel group being a signal/channel (group) used for sensing; a second signal/channel group, the second signal/channel group being a signal/channel (group) used for communication; and a third signal/channel group, the third signal/channel group being a signal/channel (group) capable of being used for both communication and sensing. So in a case where nodes in the system need to perform the following operations, how the nodes perform conflict resolution is a problem that needs to be discussed:
1) transmitting at least two of the above three types of signal/channel groups simultaneously;
2) receiving at least two of the above three types of signal/channel groups simultaneously; and
3) transmitting/receiving at least two of the above three types of signal/channel groups simultaneously.

Furthermore, each of the above three types of signal/channel groups may include multiple signals/channels. For example, the first signal/channel group is a signal/channel group used for sensing, which may include multiple signals/channels used for sensing, and may also include multiple reflected (or refracted) signals/channels used for sensing, or may also include multiple signals/channels that carry control information associated with the signals/channels for sensing (the control information is used to indicate transmission parameters of the associated signals/channels used for sensing) (which may also be referred to as control signals/channels corresponding to the signals/channels used for sensing), or may also include multiple signals/channels that carry measurement result feedback (or report) information corresponding to the signals/channels used for sensing (which may also be referred to as measurement result feedback signals/channels corresponding to the signals/channels used for sensing), or may include multiple signals/channels that carry sensing result feedback (or report) information corresponding to the signals/channels used for sensing (which may also be referred to as sensing result feedback signals/channels corresponding to the signals/channels used for sensing). The control signal/channel corresponding to the signal/channel used for sensing may carry the control information corresponding to the signal/channel used for sensing. In a case where the device in the system needs to perform the following operations, how the device performs conflict resolution to resolve the conflict problem of resources occupied by different signals/channels is a problem that needs to be discussed:
1) transmitting at least two signals/channels in the first signal/channel group simultaneously;
2) receiving at least two signals/channels in the first signal/channel group simultaneously; and
3) transmitting/receiving at least two signals/channels in the first signal/channel group simultaneously.

FIG. 4 is a schematic flowchart of a communication method 400, in accordance with an embodiment of the present application. The method may optionally be applied to the systems shown in FIG. 1 and FIG. 2A to FIG. 2H, but is not limited thereto. The method includes at least part of the following content:
S410, transmitting, by a first device, multiple signals/channels according to first information corresponding to each signal/channel in the multiple signals/channels; where signal/channel types corresponding to the multiple signals/channels include at least one of:
a signal/channel type used for sensing;
a signal/channel type used for communication; or
a signal/channel type used for communication and sensing.

For example, all of signals/channels in the multiple signals/channels correspond to the signal/channel type used for sensing, or all of the signals/channels in the multiple signals/channels correspond to the signal/channel type used for communication, or all of the signals/channels in the multiple signals/channels correspond to the signal/channel type for communication and sensing. Alternatively, some of the signals/channels in the multiple signals/channels correspond to the type of signals/channels used for sensing, and other portions correspond to the type of signals/channels used for communication. Alternatively, part of the signals/channels in the multiple signals/channels corresponds to the signal/channel type used for sensing, and the other part corresponds to the signal/channel type used for communication and sensing. Alternatively, part of the signals/channels in the multiple signals/channels corresponds to the signal/channel type used for communication, and the other part corresponds to the signal/channel type used for communication and sensing. Alternatively, in the multiple signals/channels, a first portion of the signals/channels corresponds to the signal/channel type used for sensing, a second portion of the signals/channels corresponds to the signal/channel type used for communication, and a third portion of the signals/channels corresponds to the signal/channel type used for communication and sensing.

In an implementation, a signal/channel corresponding to the signal/channel type used for sensing includes at least one of:
a signal/channel used for sensing;
a reflected signal/channel corresponding to the signal/channel used for sensing;
a control signal/channel corresponding to the signal/channel used for sensing;
a measurement result feedback signal/channel corresponding to the signal/channel used for sensing; or
a sensing result feedback signal/channel corresponding to the signal/channel used for sensing.

Here, the reflected signal/channel corresponding to the signal/channel used for sensing may also be called a refracted signal/channel corresponding to the signal/channel used for sensing, which may refer to a signal/channel obtained after the signal/channel used for sensing reaches the sensed target and is reflected or refracted by the sensed target.

The control signal/channel corresponding to the signal/channel used for sensing may carry the control information corresponding to the signal/channel used for sensing.

The measurement result feedback signal/channel corresponding to the signal/channel used for sensing that may carry a measurement result that is a result of a measurement by using the signal/channel used for sensing or other related signals/channels. For example, the related other signals/channels may be signals/channels specifically used for measurement.

The sensing result feedback signal/channel corresponding to the signal/channel used for sensing may carry a sensing result, where the sensing result is a result obtained by performing sensing by using the signal/channel used for sensing.

In some implementations, the first information includes at least one of:
(1) a priority of a signal/channel; where the priority of the signal/channel may refer to a priority between different signals/channels corresponding to a same signal/channel type; for example, there are priorities of different signals/channels in the multiple signals/channels corresponding to the signal/channel type used for sensing. For example, the first device is to transmit three signals/channels, including signal/channel A, signal/channel B and signal/channel C; all the three signals/channels correspond to the signal/channel type used for sensing, and each signal/channel in the three signals/channels corresponds to a respective priority. Alternatively, the embodiments of the present application may not limit whether each signal/channel in the multiple signals/channels corresponds to a same signal/channel type, that is, the first information refers to the priority of the signal/channel corresponding to any signal/channel type. For example, the first device is to transmit three signals/channels, including signal/channel D, signal/channel E and signal/channel F, each signal/channel in the three signals/channels may correspond to a signal/channel type, and signal/channel types corresponding to different signals/channels may be the same or different; and each signal/channel in the three signals/channels corresponds to a respective priority;
(2) a priority of a signal/channel type corresponding to the signal/channel; where the priority of the signal/channel type corresponding to the signal/channel may refer to a priority of a signal/channel type used for sensing, a priority of a signal/channel type used for communication, and/or a priority of a signal/channel type used for communication and sensing; or
(3) time domain resource allocation information; where the time domain resource allocation information may be used to determine a signal/channel group to which a signal/channel to be transmitted is affiliated, different signal/channel groups correspond to different time domain resource sets, and signals/channels in different signal/channel groups are transmitted in time domain resource sets corresponding to the signal/channel groups.

Here, the priority of the signal/channel in (1) above may also be represented as other relevant information used to characterize the priority of the signal/channel, such as the fifth-generation mobile communication service quality identifier (5QI, 5G QoS Identifier) of the signal/channel, the quality of service (QoS, Quality of Service) of the signal/channel, or the importance of the signal/channel.

The priority of the signal/channel type corresponding to the signal/channel in the above (1) may also be represented as other relevant information used to characterize the priority of the signal/channel type, such as the 5QI of the signal/channel type corresponding to the signal/channel, the QoS of the signal/channel type corresponding to the signal/channel, or the importance of the signal/channel type corresponding to the signal/channel. In some implementations, the order of priorities of the signal/channel types or the relationship between priorities of different signal/channel types may include that:
the priority of the signal/channel type used for sensing is higher than the priority of the signal/channel type used for communication; and/or
the priority of the signal/channel type used for communication and sensing is higher than the priority of the signal/channel type used for communication.

For another example, the order of priorities of the signal/channel types may also include that:
the priority of the signal/channel type used for communication is higher than the priority of the signal/channel type used for sensing; and/or
the priority of the signal/channel type used for communication and sensing is higher than the priority of the signal/channel type used for sensing.

In some implementations, the order of priorities of the signal/channel types or the relationship between priorities of different signal/channel types may be indicated by the first information or by other information.

In some implementations, the first information corresponding to each signal/channel may be agreed upon by a protocol, configured or indicated by a control node (such as a sensing control node, a network side device, or a terminal device), and/or indicated by control information corresponding to the signal/channel.

In the embodiments of the present application, according to different cases of the above-mentioned multiple signals/channels, there are at least the following cases and corresponding embodiment solutions.

Case 1: the multiple signals/channels include one or more first signals/channels to be sent and one or more second signals/channels to be received; and
Case 2: the multiple signals/channels include multiple first signals/channels to be sent.

Here, in Case 1, according to the different capabilities of the first device, there may be the following two situations that:
(1) the first device does not have/does not report a capability to simultaneously transmit and receive signals/channels, which may be understood as the first device not having the capability to simultaneously transmit and receive signals/channels or the first device not reporting the capability to simultaneously transmit and receive signals/channels; and
(2) the first device has/reports the capability to simultaneously transmit and receive signals/channels, which may be understood as the first device having the capability to simultaneously transmit and receive signals/channels or the first device reporting the capability to simultaneously transmit and receive signals/channels.

For example, if the first device reports the capability to simultaneously transmit and receive signals/channels to relevant devices (such as a sensing and control device, a network-side device, or a terminal device), it indicates that the first device has the capability to simultaneously transmit and receive signals/channels; and if the first device does not report the capability to simultaneously transmit and receive signals/channels to relevant devices (such as a sensing and control device, a network-side device, or a terminal device), it indicates that the first device does not have the capability to simultaneously transmit and receive signals/channels.

### The following is a detailed introduction to each of the above cases:

### Specific Embodiment 1

The multiple signals/channels include one or more first signals/channels to be sent and one or more second signals/channels to be received; where the one or more first signals/channels to be sent and the one or more second signals/channels to be received conflict partially or completely in a time domain.

In some implementations, the first device does not have or does not report the capability to simultaneously transmit and receive signals/channels. For example, the first device does not report the capability to simultaneously transmit and receive signals/channels to the relevant device (e.g., a sensing control device), which indicates that the first device does not have the capability to simultaneously transmit and receive signals/channels.

S410 may specifically include or be performed as follows: transmitting, by the first device, the multiple signals/channels according to first information corresponding to each signal/channel in the one or more first signals/channels and first information corresponding to each signal/channel in the one or more second signals/channels.

In some implementations, in a case where a first priority is higher than a second priority, the first device sends part or all of the one or more first signals/channels; or

in a case where the second priority is higher than the first priority, the first device receives part or all of the one or more second signals/channels.

Here, the first priority is a priority of a signal/channel with the highest priority in the one or more first signals/channels; and the second priority is a priority of a signal/channel with the highest priority in the one or more second signals/channels.

Here, a priority of each signal/channel in the multiple signals/channels is determined by the first information corresponding to each signal/channel. In some specific embodiments, the first information used for determining the priority of each signal/channel in the above multiple signals/channels may include at least one of:
the priority of the signal/channel; or the priority of the signal/channel type corresponding to the signal/channel.

In some specific embodiments, the first device is about to send M1 (M1 is a positive integer) first signals/channels (i.e., to be sent) and receive N1 (N1 is a positive integer) second signals/channels (i.e., to be received) simultaneously, and the M1 first signals/channels and the N1 second signals/channels partially or completely conflict in the time domain. In a case where the first device does not have/does not report the capability to simultaneously transmit and receive signals/channels, the first device determines whether to send or receive signals/channels according to a priority (corresponding to the above-mentioned first priority) of a signal/channel with the highest priority in the M1 first signals/channels (hereinafter referred to as CH1, and there may be one or more signals/channels each with the highest priority in the M1 first signals/channels) and a priority (corresponding to the above-mentioned second priority) of a signal/channel with the highest priority in the N1 second signals/channels (hereinafter referred to as CH2, and there may be one or more signals/channels each with the highest priority in the M1 first signals/channels). In a case where the priority of CH1 is higher than the priority of CH2, the first device determines to only send the signals/channels; and in a case where the priority of CH1 is lower than the priority of CH2, the first device determines to only receive the signals/channels.

In some implementations, in a case where the first priority is higher than the second priority, sending, by the first device, part or all of the one or more first signals/channels, may include: sending, by the first device, part or all of the one or more first signals/channels according to at least one of a maximum output power of the first device or a maximum number of signals/channels capable of being sent by the first device.

Specifically, the first device may send N first signals/channels in the one or more first signals/channels, where N is a maximum value that satisfies a first condition and/or a second condition, and N is a positive integer; and the N first signals/channels are part or all of the one or more first signals/channels; where
the first condition includes that: N is less than or equal to the maximum number of the signals/channels capable of being sent by the first device; and
the second condition includes that: a sum of first powers corresponding to all first signals/channels in the N first signals/channels is less than or equal to the maximum output power.

For example, the first device is to send 4 first signals/channels and to receive 5 second signals/channels; in a case where a priority of a first signal/channel with the highest priority in the 4 first signals/channels is higher than a priority of a second signal/channel with the highest priority in the 5 second signals/channels, the first device determines to send 3 first signals/channels in the 4 first signals/channels according to the maximum output power of the first device and the maximum number of the signals/channels capable of being sent by the first device (assumed to be 3), and a sum of first powers corresponding to all first signals/channels in the 3 first signals/channels is less than the maximum output power.

In some implementations, in a case where the first priority is higher than the second priority, sending, by the first device, part or all of the one or more first signals/channels, may include: sending, by the first device, at least one first signal/channel in the one or more first signals/channels, where a priority of the sent first signal/channel is higher than a priority of an unsent first signal/channel, and the unsent first signal/channel includes a first signal/channel in the one or more first signals/channels except the sent first signal/channel.

(I) If the priority of the signal/channel with the highest priority in the M1 first signals/channels (e.g., CH1) is higher than the priority of the signal/channel with the highest priority in the N1 second signals/channels (e.g., CH2), the first device only sends part or all of the M1 first signals/channels. The first device sends part or all of the M1 first signals/channels in the following method.

(1) In a case where the maximum number of the signals/channels capable of being sent by the first device does not exist or the first device does not report the maximum number of the signals/channels capable of being sent by the first device, or the maximum number of the signals/channels capable of being sent by the first device is greater than or equal to M1:
if the maximum output power of the first device is greater than or equal to a sum of the first powers corresponding to all first signals/channels in the M1 first signals/channels, the first device sends all of the M1 first signals/channels; or
if the maximum output power of the first device is less than the sum of the first powers corresponding to all first signals/channels in the M1 first signals/channels, the first device sends part of the M1 first signals/channels. Specifically, the first device may send at least one first signal/channel in the M1 first signals/channels, where the priority of the sent first signal/channel is higher than the priority of the unsent first signal/channel, and the unsent first signal/channel includes the first signal/channel in the M1 first signals/channels except the sent first signal/channel; and a sum of the first powers corresponding to all first signals/channels in the sent at least one first signal/channel is less than or equal to the maximum output power. For example, the first device sorts the M1 first signals/channels in the order of priorities from highest to lowest, and selects P1 (P1 is a positive integer) first signals/channels from highest to lowest, with a priority of any first signal/channel in the selected P1 first signals/channels being higher than a priority of any remaining first signal/channel; and transmits the P1 first signals/channels, so that the sum of first powers corresponding to all first signals/channels in the P1 first signals/channels sent by the first device is less than or equal to the maximum output power of the first device, and P1 is a maximum value that satisfies that the sum of the first powers corresponding to all first signals/channels in the P1 first signals/channels is less than or equal to the maximum output power of the first device. The priority of the first signal/channel may be represented by a priority index, for example, a larger priority index indicates a higher priority, or a smaller priority index indicates a higher priority. If a larger priority index indicates a higher priority, a specific way in which the aforementioned first device sorts the M1 first signals/channels in the order of priorities from highest to lowest may be as follows: sort in the order of priority indexes from largest to smallest. If a smaller priority index indicates a higher priority, the specific way in which the aforementioned first device sorts the M1 first signals/channels in the order of priorities from highest to lowest may be as follows: sort in the order of priority indexes from smallest to largest.

(2) In a case where the maximum number of the signals/channels capable of being sent by the first device is less than M1, the first device sends part or all of Pmax (Pmax is a positive integer) first signals/channels according to the maximum output power of the first device and a first power corresponding to each first signal/channel in the M1 first signals/channels; where

Pmax is the maximum number of the signals/channels capable of being sent by the first device, and Pmax is a positive integer; and
a priority of any first signal/channel in the Pmax first signals/channels is higher than a priority of any first signal/channel in the one or more first signals/channels except the Pmax first signals/channels.

For example, the first device sorts the M1 first signals/channels according to the priority, and selects P first signals/channels from highest to lowest, with a priority of any first signal/channel in the P first signals/channels being higher than a priority of the remaining first signal/channel (i.e., a priority of a first signal/channel in the M1 first signals/channels except the P first signals/channels).

If the maximum output power of the first device is greater than or equal to a sum of the first powers corresponding to all first signals/channels in the Pmax first signals/channels, the first device sends the Pmax first signals/channels.

If the maximum output power of the first device is less than the sum of the first powers corresponding to all first signals/channels in the Pmax first signals/channels, the first device sends part of the Pmax first signals/channels. Specifically, the first device sends at least one first signal/channel in the Pmax first signals/channels, where the priority of the sent first signal/channel is higher than the priority of the unsent first signal/channel, and the unsent first signal/channel includes the first signal/channel in the Pmax first signals/channels except the sent first signal/channel; and a sum of the first powers corresponding to all first signals/channels in the sent at least one first signal/channel is less than or equal to the maximum output power. For example, the first device sorts the Pmax first signals/channels in the order of priorities from highest to lowest, and determines P2 (where P2 is a positive integer) first signals/channels therein, with a priority of any first signal/channel in the P2 first signals/channels being higher than a priority of the remaining first signal/channel (i.e., a first signal/channel in the Pmax first signals/channels except the P2 first signals/channels); and transmits the P2 first signals/channels, and the sum of the first powers corresponding to all first signals/channels in the P2 first signals/channels sent by the first device is less than or equal to the maximum output power of the first device, and P2 is a maximum value that satisfies the above conditions. The priority of the first signal/channel may be represented by a priority index, for example, a larger priority index indicates a higher priority, or a smaller priority index indicates a higher priority. If a larger priority index indicates a higher priority, a specific way in which the aforementioned first device sorts the Pmax first signals/channels in the order of priorities from highest to lowest may be as follows: sort in the order of priority indexes from largest to smallest. If a smaller priority index indicates a higher priority, the specific way in which the aforementioned first device sorts the Pmax first signals/channels in the order of priorities from highest to lowest may be as follows: sort in the order of priority indexes from smallest to largest.

(II) If the priority of the signal/channel with the highest priority in the M1 first signals/channels (e.g., CH1) is lower than the priority of the signal/channel with the highest priority in the N1 second signals/channels (e.g., CH2), the first device only receives part or all of the N1 first signals/channels. The first device receives part or all of the N1 first signals/channels in the following method.

(1) In a case where a maximum number of signals/channels capable of being received by the first device does not exist or is not reported by the first device, or the maximum number of the signals/channels capable of being received by the first device is greater than or equal to N1, the first device receives the N1 second signals/channels.

(2) In a case where the maximum number of the signals/channels capable of being received by the first device (hereinafter referred to as Pmax', where Pmax' is a positive integer) is less than N1, the first device receives Pmax' second signals/channels. For example, the first device may sort the N1 second signals/channels in the order of priorities from highest to lowest, and select Pmax' second signals/channels for reception, where a priority of any second signal/channel in the received second signals/channels is higher than a priority of any unreceived second signal/channel, and the unreceived second signal/channel includes a second signal/channel in the one or more second signals/channels except the received second signals/channels. The priority of the second signal/channel may be represented by a priority index, for example, a larger priority index indicates a higher priority, or a smaller priority index indicates a higher priority. If a larger priority index indicates a higher priority, a specific way in which the aforementioned first device sorts the N1 second signals/channels in the order of priorities from highest to lowest may be as follows: sort in the order of priority indexes from largest to smallest. If a smaller priority index indicates a higher priority, the specific way in which the aforementioned first device sorts the N1 second signals/channels in the order of priorities from highest to lowest may be as follows: sort in the order of priority indexes from smallest to largest.

In the above embodiments, each signal/channel in the first signal/channel to be sent and the second signal/channel to be received (including the first signal/channel and the second signal/channel) may be a signal/channel of any type, and the first information corresponding to each signal/channel includes the priority of the signal/channel.

In the above embodiments, each signal/channel in the first signal/channel to be sent and the second signal/channel to be received (including the first signal/channel and the second signal/channel) may correspond to any signal/channel type, and the first information of each signal/channel may include the priority of the signal/channel type corresponding to the signal/channel. Here, the signal/channel type corresponding to each signal/channel may be any type of the signal/channel type used for sensing, the signal/channel type used for communication, and the signal/channel type used for communication and sensing, and the first information corresponding to each signal/channel may be the priority of the signal/channel type corresponding to the signal/channel. The priority order of different signal/channel types may be any order, including but not limited to that: the priority of the signal/channel type used for sensing is higher than the priority of the signal/channel type used for communication, and the priority of the signal/channel type used for communication and sensing is higher than the priority of the signal/channel type used for communication; alternatively, the priority of the signal/channel type used for communication is higher than the priority of the signal/channel type used for sensing, and the priority of the signal/channel type used for communication and sensing is higher than the priority of the signal/channel type used for sensing.

In the above embodiments, each signal/channel in the first signal/channel to be sent and the second signal/channel to be received (including the first signal/channel and the second signal/channel) may correspond to the signal/channel type used for sensing, and each signal/channel may be any of the following signals/channels:
a signal/channel used for sensing;
a reflected signal/channel corresponding to the signal/channel used for sensing;
a control signal/channel corresponding to the signal/channel used for sensing;
a measurement result feedback signal/channel corresponding to the signal/channel used for sensing; and
a sensing result feedback signal/channel corresponding to the signal/channel used for sensing.

The first information corresponding to each signal/channel may be agreed upon by a protocol, configured or indicated by a control node, or indicated by control information corresponding to the signal/channel.

### Specific Embodiment 2

The multiple signals/channels include multiple first signals/channels to be sent, and one or more first signals/channels to be sent conflict partially or completely in a time domain.

S410 may specifically include or be performed as follows: sending, by the first device, part or all of the one or more first signals/channels according to the first information corresponding to each signal/channel in the one or more first signals/channels.

In some implementations, the first device sends part or all of the one or more first signals/channels according to at least one of a maximum output power of the first device or a maximum number of signals/channels capable of being sent by the first device.

Specifically, the first device may send N first signals/channels in the one or more first signals/channels, where N is a maximum value that satisfies a first condition and/or a second condition, and N is a positive integer; and the N first signals/channels are the part or all of the one or more first signals/channels; where
the first condition includes that: N is less than or equal to the maximum number of the signals/channels capable of being sent by the first device; and
the second condition includes that: a sum of first powers corresponding to all first signals/channels in the N first signals/channels is less than or equal to the maximum output power.

In some implementations, sending, by the first device, part or all of the one or more first signals/channels, includes: sending, by the first device, at least one first signal/channel in the one or more first signals/channels, where a priority of the sent first signal/channel is higher than a priority of an unsent first signal/channel, and the unsent first signal/channel includes a first signal/channel in the one or more first signals/channels except the sent first signal/channel.

For example, the first device is about to send M2 (M2 is a positive integer) first signals/channels simultaneously. The first device sends part or all of the M2 first signals/channels in the following methods.
(1) In a case where the maximum number of the signals/channels capable of being sent by the first device does not exist or is not reported by the first device, or the maximum number of the signals/channels capable of being sent by the first device is greater than or equal to M2:
   if the maximum output power of the first device is greater than or equal to a sum of first powers corresponding to all first signals/channels in the M2 first signals/channels, the first device sends all of the M2 first signals/channels; or
   if the maximum output power of the first device is less than the sum of the first powers corresponding to all first signals/channels in the M2 first signals/channels, the first device sends part of the M2 first signals/channels. Specifically, the first device may send at least one first signal/channel in the M2 first signals/channels, and a priority of the sent first signal/channel is higher than a priority of an unsent first signal/channel, and the unsent first signal/channel is a first signal/channel in the M2 first signals/channels except the sent first signal/channel; and a sum of the first powers corresponding to all first signals/channels in the sent at least one first signal/channel is less than or equal to the maximum output power. For example, the first device sorts the M2 first signals/channels in the order of priorities from highest to lowest, and determines P3 (P3 is a positive integer) first signals/channels, where a priority of any first signal/channel in the P3 first signals/channels is higher than a priority of the remaining first signal/channel (i.e., a first signal/channel in the M2 first signals/channels except the P3 first signals/channels); and sends the P3 first signals/channels, so that a sum of first powers corresponding to all first signals/channels in the P3 first signals/channels sent by the first device is less than or equal to the maximum output power of the first device, and P3 is a maximum value that satisfies the above conditions. The priority of the first signal/channel may be represented by a priority index, for example, a larger priority index indicates a higher priority, or a smaller priority index indicates a higher priority. If a larger priority index indicates a higher priority, a specific way in which the aforementioned first device sorts the M2 first signals/channels in the order of priorities from highest to lowest may be as follows: sort in the order of priority indexes from largest to smallest. If a smaller priority index indicates a higher priority, the specific way in which the aforementioned first device sorts the M2 first signals/channels in the order of priorities from highest to lowest may be as follows: sort in the order of priority indexes from smallest to largest.
(2) In a case where the maximum number of the signals/channels capable of being sent by the first device is less than M2, the first device sends part or all of Pmax (Pmax is a positive integer) first signals/channels according to the maximum output power of the first device and a first power corresponding to each first signal/channel in the M2 first signals/channels; where

Pmax is the maximum number of the signals/channels capable of being sent by the first device, and Pmax is a positive integer; and
a priority of any first signal/channel in the Pmax first signals/channels is higher than a priority of any first signal/channel in the one or more first signals/channels except the Pmax first signals/channels.

For example, the first device sorts the M2 first signals/channels according to the priority and determines the Pmax first signals/channels.

If the maximum output power of the first device is greater than or equal to the sum of the first powers corresponding to all first signals/channels in the Pmax first signals/channels, the first device sends the Pmax first signals/channels with the highest priority.

If the maximum output power of the first device is less than the sum of the first powers corresponding to all first signals/channels in the Pmax first signals/channels, the first device sends part of the Pmax first signals/channels. Specifically, the first device sends at least one first signal/channel in the Pmax first signals/channels, where a priority of the sent first signal/channel is higher than a priority of an unsent first signal/channel, and the unsent first signal/channel includes a first signal/channel in the Pmax first signals/channels except the sent first signal/channel; and a sum of the first powers corresponding to all first signals/channels in the at least one sent first signal/channel is less than or equal to the maximum output power. For example, the first device sorts the Pmax first signals/channels in the order of priorities from highest to lowest, and determines P4 (P4 is a positive integer) first signals/channels therein, where a priority of P2 first signals/channels is higher than a priority of the remaining first signal/channel (i.e., a first signal/channel in the Pmax first signals/channels except the P4 first signals/channels); and sends the P4 first signals/channels, a sum of the first powers corresponding to all first signals/channels in the P4 first signals/channels sent by the first device is less than or equal to the maximum output power of the first device, and P4 is a maximum value that satisfies the above conditions. For example, a larger priority index indicates a higher priority, or a smaller priority index indicates a higher priority. If a larger priority index indicates a higher priority, a specific way in which the aforementioned first device sorts the Pmax first signals/channels in the order of priorities from highest to lowest may be as follows: sort in the order of priority indexes from largest to smallest. If a smaller priority index indicates a higher priority, the specific way in which the aforementioned first device sorts the Pmax first signals/channels in the order of priorities from highest to lowest may be as follows: sort in the order of priority indexes from smallest to largest.

In this example, each signal/channel in the first signal(s)/channel(s) to be sent may be a signal/channel of any type, and the first information of each signal/channel includes the priority of the signal/channel.

Alternatively, each signal/channel in the first signal(s)/channel(s) to be sent may be a signal/channel of any type, and the first information of each signal/channel may include the priority of the signal/channel type corresponding to the signal/channel. For example, the signal/channel type corresponding to each signal/channel may be any type of the signal/channel type used for sensing, the signal/channel type used for communication, and the signal/channel type used for communication and sensing, and then the first information of the signal/channel may be the priority of the signal/channel type corresponding to the signal/channel. The priority order of different signal/channel types may be any order, for example, the priority of the signal/channel type used for sensing is higher than the priority of the signal/channel type used for communication, and the priority of the signal/channel type used for communication and sensing is higher than the priority of the signal/channel type used for communication; alternatively, the priority of the signal/channel type used for communication is higher than the priority of the signal/channel type used for sensing, and the priority of the signal/channel type used for communication and sensing is higher than the priority of the signal/channel type used for sensing.

Alternatively, each signal/channel in the first signal(s)/channel(s) to be sent may correspond to the signal/channel type used for sensing, and each signal/channel (including the first signal/channel and the second signal/channel) may be any signal/channel of :
a signal/channel used for sensing;
a reflected signal/channel corresponding to the signal/channel used for sensing;
a control signal/channel corresponding to the signal/channel used for sensing;
a measurement result feedback signal/channel corresponding to the signal/channel used for sensing; and
a sensing result feedback signal/channel corresponding to the signal/channel used for sensing.

The first information of each signal/channel may be agreed upon by a protocol, or configured or indicated by a control node, or indicated by control information corresponding to the signal/channel.

### Specific Embodiment 3

The multiple signals/channels include one or more first signals/channels to be sent and one or more second signals/channels to be received.

S410 may specifically include or be performed as follows: transmitting, by the first device, the multiple signals/channels according to first information corresponding to each signal/channel in the one or more first signals/channels and first information corresponding to each signal/channel in the one or more second signals/channels.

In some implementations, the first device sends part or all of first signals/channels in one or more first signals/channels, where a priority of the sent first signal/channel is higher than a priority of an unsent first signal/channel, and the unsent first signal/channel is a first signal/channel in the one or more first signals/channels except the sent first signal/channel.

The first device receives part or all of second signals/channels in the one or more second signals/channels, where a priority of any second signal/channel in the received second signals/channels is higher than a priority of any unreceived second signal/channel, and the unreceived second signal/channel includes a second signal/channel in the one or more second signals/channels except the received second signal/channel.

Here, a priority of each signal/channel in the above multiple signals/channels is determined by first information corresponding to each signal/channel, the first information including at least one of: a priority of the signal/channel, or a priority of a signal/channel type corresponding to the signal/channel.

In some implementations, the first device has/reports the capability to simultaneously transmit and receive signals/channels. The first device reports the capability to simultaneously transmit and receive signals/channels to a relevant device (e.g., a sensing control device), which may indicate that the first device has the capability to simultaneously transmit and receive signals/channels.

In some implementations, sending, by the first device, part or all of the first signals/channels in the one or more first signals/channels, includes:
sending, by the first device, N first signals/channels in the one or more first signals/channels, where N is a maximum value that satisfies a first condition and/or a second condition, and N is a positive integer; and the N first signals/channels are part or all of the one or more first signals/channels; where
the first condition includes that: N is less than or equal to the maximum number of the signals/channels capable of being sent by the first device; and
the second condition includes that: a sum of first powers corresponding to all first signals/channels in the N first signals/channels is less than or equal to the maximum output power of the first device.

In some implementations, a number of received second signals/channels is less than or equal to a maximum number of signals/channels capable of being received by the first device.

In some implementations, a number of signals/channels transmitted (including sent and received) by the first device is less than or equal to a maximum number of signals/channels capable of being transmitted by the first device.

In this example, each signal/channel in the first signal/channel to be sent and the second signal/channel to be received may be a signal/channel of any type, and the first information of each signal/channel (including the first signal/channel and the second signal/channel) includes the priority of the signal/channel.

Alternatively, each signal/channel in the first signal/channel to be sent and the second signal/channel to be received may correspond to any signal/channel type, and the first information of each signal/channel (including the first signal/channel and the second signal/channel) may include the priority of the signal/channel type corresponding to the signal/channel. For example, the signal/channel type corresponding to each signal/channel may be any type of the signal/channel type used for sensing, the signal/channel type used for communication, and the signal/channel type used for communication and sensing, and then the first information of the signal/channel may be the priority of the signal/channel type corresponding to the signal/channel. The priority order of different signal/channel types may be any order, for example, the priority of the signal/channel type used for sensing is higher than the priority of the signal/channel type used for communication, and the priority of the signal/channel type used for communication and sensing is higher than the priority of the signal/channel type used for communication; alternatively, the priority of the signal/channel type used for communication is higher than the priority of the signal/channel type used for sensing, and the priority of the signal/channel type used for communication and sensing is higher than the priority of the signal/channel type used for sensing.

Alternatively, each signal/channel in the first signal/channel to be sent and the second signal/channel to be received may correspond to the signal/channel type used for sensing, and each signal/channel (including the first signal/channel and the second signal/channel) may be any signal/channel of:
a signal/channel used for sensing;
a reflected signal/channel corresponding to the signal/channel used for sensing;
a control signal/channel corresponding to the signal/channel used for sensing;
a measurement result feedback signal/channel corresponding to the signal/channel used for sensing; and
a sensing result feedback signal/channel corresponding to the signal/channel used for sensing.

The first information of each signal/channel may be agreed upon by a protocol, or configured or indicated by a control node, or indicated by control information corresponding to the signal/channel.

For example, the first device is about to send M first signals/channels and receive N second signals/channels simultaneously, and the M first signals/channels conflict with the N second signals/channels in the time domain. The first device performs conflict resolution in the following method in which:
the M first signals/channels and the N second signals/channels are arranged together in the order of priorities, and the first device determines Q first signals/channels to be sent and S second signals/channels to be received, where the Q first signals/channels and the S second signals/channels satisfy at least one of the following conditions that:
(1) a priority of any first signal/channel in the Q first signals/channels is higher than a priority of the remaining first signal/channel, where the remaining first signal/channel is a first signal/channel in the M first signals/channels except the Q first signals/channels; and a priority of any second signal/channel in the S second signals/channels is higher than a priority of the remaining second signal/channel, where the remaining second signal/channel is a second signal/channel in the N first signals/channels except the S second signals/channels;
(2) a sum of first powers corresponding to all first signals/channels in the Q first signals/channels to be sent by the first device is less than the maximum output power of the first device, where Q is a maximum value that satisfies the above conditions;
(3) a number of the S second signals/channels to be received by the first device is less than or equal to a maximum number of second signals/channels capable of being received by the first device; or
(4) a number of Q+S signals/channels (including the first signal/channel and the second signal/channel) to be transmitted (including to be sent and to be received) by the first device is less than or equal to a maximum number of signals/channels (including the first signal/channel and the second signal/channel) capable of being transmitted by the first device.

The above introduces three specific examples in which the first device transmits the multiple signals/channels according to the first information of each signal/channel in the multiple signals/channels. Different conflict resolution mechanisms are designed according to first devices with different capabilities, which may effectively ensure a transmission of high-priority signals/channels, while endeavoring to transmit low-priority signals/channels according to the capabilities of the first device.

In various examples of the present application, a signal/channel corresponding to the signal/channel type used for sensing includes at least one of:
a signal/channel used for sensing;
a reflected signal/channel corresponding to the signal/channel used for sensing;
a control signal/channel corresponding to the signal/channel used for sensing;
a measurement result feedback signal/channel corresponding to the signal/channel used for sensing; or
a sensing result feedback signal/channel corresponding to the signal/channel used for sensing.

For a signal/channel used for sensing, a priority of at least one of a reflected signal/channel, a control signal/channel, a measurement result feedback signal/channel, or a sensing result feedback signal/channel corresponding thereto may be the same as a priority of the signal/channel used for sensing.

For example, a signal/channel A is a signal/channel used for sensing, and at least one of the following signals/channels may have the same priority: the signal/channel A, a reflected signal/channel corresponding to the signal/channel A, a control signal/channel corresponding to the signal/channel A, a measurement result feedback signal/channel corresponding to the signal/channel A, and a sensing result feedback signal/channel corresponding to the signal/channel A. The priority may be agreed upon by a protocol, configured by a control node (e.g., a sensing control node), or indicated by sensing control information; and if the priority of any one of the aforementioned signals/channels has been determined, priorities of other signals/channels may be obtained. For example, if the control node configures the priority of the signal/channel A to be L to the first device, the first device may determine that the priorities of the reflected signal/channel corresponding to the signal/channel A, the control signal/channel corresponding to the signal/channel A, the measurement result feedback signal/channel corresponding to the signal/channel A, and the sensing result feedback signal/channel corresponding to the signal/channel A are each also L.

### Specific Embodiment 4

Transmitting, by the first device, the multiple signals/channels according to first information corresponding to each signal/channel in the multiple signals/channels, includes:
transmitting, by the first device, a first signal/channel group in a first time domain resource set, and transmitting, by the first device, a second signal/channel group in a second time domain resource set; where the first time domain resource set is non-overlapping with the second time domain resource set; and the first signal/channel group includes at least one signal/channel in the multiple signals/channels, the second signal/channel group includes at least one signal/channel in the multiple signals/channels, and the signal/channel included in the first signal/channel group and the signal/channel included in the second signal/channel group are determined by the first information.

For example, the first device receives the first information indicated by the control node, and determines, according to the first information, that X1 signals/channels in X signals/channels to be transmitted belong to the first signal/channel group, and X2 signals/channels in the X signals/channels to be transmitted belong to the second signal/channel group (X=X1+X2), thereby transmitting the X1 signals/channels in the first time domain resource set corresponding to the first signal/channel group, and transmitting the X2 signals/channels in the second time domain resource set corresponding to the second signal/channel group.

In some implementations, the first/second time domain resource set may be a resource pool. The first time domain resource set is non-overlapping with the second time domain resource set, which may mean that there is no time unit that belongs to both the first time domain resource set and the second time domain resource set.

In some implementations, the first time domain resource set and the second time domain resource set are agreed upon by a protocol, and/or the first time domain resource set and the second time domain resource set are configured/indicated by a control node.

In some implementations, the first signal/channel group includes signals/channels used for sensing, and the second signal/channel group includes signals/channels used for communication.

In some implementations, a transmission of the first signal/channel group and a transmission of the second signal/channel group occupy different time domain resources, for example, a transmission of a signal/channel group used for sensing and a transmission of a signal/channel group used for communication occupy different time domain resources. The first signal/channel group may be configured to be transmitted in the first time domain resource set and the second signal/channel group may be configured to be transmitted in the second time domain resource set through protocol agreement or sensing control node configuration/instruction, and there is no overlap between the first time domain resource set and the second time domain resource set. That is, a single time domain resource unit may only belong to the first time domain resource set or the second time domain resource set. The time domain resource set may include multiple symbols, or multiple time slots, or multiple time domain periods, etc. And may also include a resource pool.

In addition, if there is a third signal/channel group, a transmission of the third signal/channel group may be configured to occur in the first time domain resource set or the second time domain resource set through protocol agreement or sensing control node configuration; or a third time domain resource set may be defined for the third signal/channel group, the third time domain resource set is used to transmit the third signal/channel group, and the third time domain resource set is non-overlapping with both the first time domain resource set and the second time domain resource set. The third signal/channel group may include a signal/channel used for communication and sensing. For example, in a case where the signal/channel in the third signal/channel group is used for sensing, the third signal/channel group is transmitted in the first time domain resource set; and in a case where the signal/channel in the third signal/channel group is used for communication, the third signal/channel group is transmitted in the second time domain resource set.

The above introduces a method in which the first device divides the multiple signals/channels to be transmitted into different signal/channel groups and transmits signals/channels of the different signal/channel groups in time domain resource sets corresponding to the different signal/channel groups, which may effectively ensure a transmission of high-priority signals/channels, and avoid conflicts between signal/channel transmissions.

The following are several specific embodiments to introduce the communication method of the embodiments of the present application.

### Embodiment 1

In a sensing communication system, at least two of the following two signal/channel types exist:
A first signal/channel group, where the first signal/channel group is a signal/channel (group) used for sensing, such as sensing reference signal (Sensing RS) 1, and Sensing RS 2; and
A second signal/channel group, where the second signal/channel group is a signal/channel (group) used for communication, such as a physical uplink shared channel (PUSCH), a sounding reference signal (SRS), a physical downlink shared channel (PDSCH), a channel state information-reference signal (CSI-RS), a physical sidelink shared channel (PSSCH), and a physical sidelink control channel (PSCCH).

The first device is about to send sensing RS 1 and receive PDSCH. Sensing RS1 and PDSCH overlap in the time domain. The first device does not have the capability to simultaneously transmit and receive the first signal/channel group and the second signal/channel group, and the priority of the signal/channel used for communication is higher than the priority of the signal/channel used for sensing, so the first device only receives PDSCH.

### Embodiment 2

In a sensing communication system, at least two of the following two signal/channel types exist:
A first signal/channel group, where the first signal/channel group is a signal/channel (group) used for sensing, such as sensing reference signal (Sensing RS) 1, and Sensing RS 2; and
A second signal/channel group, where the second signal/channel group is a signal/channel (group) used for communication, such as a physical uplink shared channel (PUSCH), a sounding reference signal (SRS), a physical downlink shared channel (PDSCH), a channel state information-reference signal (CSI-RS), a physical sidelink shared channel (PSSCH), and a physical sidelink control channel (PSCCH).

The first device is about to send Sensing RS1 and PUSCH. Sensing RS1 and PUSCH overlap in the time domain, the first device has the capability to simultaneously transmit and receive the first signal/channel group and the second signal/channel group, the total power required to send Sensing RS 1 and PUSCH exceeds the maximum output power of the terminal, and the priority of the signal/channel used for sensing is higher than the priority of the signal/channel used for communication, so the first device prioritizes a transmission power of Sensing RS 1, that is, power allocation is performed in the descending order of Sensing RS1 and PUSCH, and the total power after allocated is ensured to be less than the maximum output power of the terminal.

### Embodiment 3

In a sensing communication system, at least two of the following three signal/channel types exist:
A first signal/channel group, where the first signal/channel group is a signal/channel (group) used for sensing, and includes a first signal/channel and a second signal/channel;
A second signal/channel group, where the second signal/channel group is a signal/channel (group) used for communication, and includes a first signal/channel and a second signal/channel; and
A third signal/channel group, where the third signal/channel group is a signal/channel (group) used for both communication and sensing, and includes a first signal/channel and a second signal/channel.

An example of priorities is as follows (in descending order):
1) the first signal/channel included in the third signal/channel group
2) the second signal/channel included in the third signal/channel group
3) the first signal/channel included in the second signal/channel group
4) the second signal/channel included in the second signal/channel group
5) the first signal/channel included in the first signal/channel group
6) the second signal/channel included in the first signal/channel group

Alternatively, another example of the priorities is as follows (in descending order):
1) the first signal/channel included in the third signal/channel group
2) the first signal/channel included in the second signal/channel group
3) the first signal/channel included in the first signal/channel group
4) the second signal/channel included in the third signal/channel group
5) the second signal/channel included in the second signal/channel group
6) the second signal/channel included in the first signal/channel group

That is, in a case where priorities of all signals/channels are determined based on priorities of different groups of signals/channels and priorities of signals/channels in a same group, they may be arranged first according to the priorities of different signal/channel groups, and then according to the priorities of signals/channels in the same group; or they may be arranged in a mixed manner according to the priorities of different signal/channel groups and the priorities of different signals/channels in the same group. That is, any order of distribution is not excluded.

FIG. 5 is a schematic flowchart of a communication method 500, in accordance with an embodiment of the present application. The method may optionally be applied to the system shown in FIG. 1, but is not limited thereto. The method includes at least part of the following content:
S510, receiving, by a second device, multiple signals/channels, the multiple signals/channels being transmitted according to first information corresponding to each signal/channel in the multiple signals/channels; where signal/channel types corresponding to the multiple signals/channels include at least one of:
a signal/channel type used for sensing;
a signal/channel type used for communication; or
a signal/channel type used for communication and sensing.

In some implementations, a signal/channel corresponding to the signal/channel type used for sensing includes at least one of:
a signal/channel used for sensing;
a reflected signal/channel corresponding to the signal/channel used for sensing;
a control signal/channel corresponding to the signal/channel used for sensing;
a measurement result feedback signal/channel corresponding to the signal/channel used for sensing; or
a sensing result feedback signal/channel corresponding to the signal/channel used for sensing.

In some implementations, the first information includes at least one of:
a priority of the signal/channel;
a priority of the signal/channel type corresponding to the signal/channel; or
time domain resource allocation information.

For other relevant contents in this embodiment, reference may be made to the relevant contents in the embodiment described in FIG. 4, which will not be described in detail here.

FIG. 6 is a schematic block diagram of a device 600, in accordance with an embodiment of the present application. The device 600 may include:
a transmission module 610, configured to transmit multiple signals/channels according to first information corresponding to each signal/channel in the multiple signals/channels; where signal/channel types corresponding to the multiple signals/channels include at least one of:
a signal/channel type used for sensing;
a signal/channel type used for communication; or
a signal/channel type used for communication and sensing.

In some implementations, a signal/channel corresponding to the signal/channel type used for sensing includes at least one of:
a signal/channel used for sensing;
a reflected signal/channel corresponding to the signal/channel used for sensing;
a control signal/channel corresponding to the signal/channel used for sensing;
a measurement result feedback signal/channel corresponding to the signal/channel used for sensing; or
a sensing result feedback signal/channel corresponding to the signal/channel used for sensing.

In some implementations, the first information includes at least one of:
a priority of the signal/channel;
a priority of a signal/channel type corresponding to the signal/channel; or
time domain resource allocation information.

In some implementations, the multiple signals/channels include one or more first signals/channels to be sent and one or more second signals/channels to be received.

The transmission module 610, is configured to transmit the multiple signals/channels according to first information corresponding to each signal/channel in the one or more first signals/channels and first information corresponding to each signal/channel in the one or more second signals/channels.

In some implementations, a signal/channel corresponding to the signal/channel type used for sensing includes at least one of:
a signal/channel used for sensing;
a reflected signal/channel corresponding to the signal/channel used for sensing;
a control signal/channel corresponding to the signal/channel used for sensing;
a measurement result feedback signal/channel corresponding to the signal/channel used for sensing; or
a sensing result feedback signal/channel corresponding to the signal/channel used for sensing.

In some implementations, the first information includes at least one of:
a priority of the signal/channel;
a priority of a signal/channel type corresponding to the signal/channel; or
time domain resource allocation information.

In some implementations, the multiple signals/channels include one or more first signals/channels to be sent and one or more second signals/channels to be received.

Here, the transmission module 610 transmits the multiple signals/channels according to the first information corresponding to each signal/channel in the one or more first signals/channels and the first information corresponding to each signal/channel in the one or more second signals/channels.

In some implementations, in a case where a first priority is higher than a second priority, the transmission module 610 sends part or all of the one or more first signals/channels; or

in a case where the second priority is higher than the first priority, the transmission module 610 receives part or all of the one or more second signals/channels; where
the first priority is a priority of the signal/channel with the highest priority in the one or more first signals/channels; and
the second priority is the priority of the signal/channel with the highest priority in the one or more second signals/channels.

A priority of each signal/channel in the multiple signals/channels is determined by first information corresponding to each signal/channel, the first information including at least one of the priority of the signal/channel or a priority of a signal/channel type corresponding to the signal/channel.

In some implementations, the device does not have or does not report a capability to simultaneously transmit and receive signals/channels.

In some implementations, the multiple signals/channels include one or more first signals/channels to be sent.

The transmission module 610 sends part or all of the one or more first signals/channels according to first information corresponding to each signal/channel in the one or more first signals/channels.

In some implementations, the transmission module 610 sends part or all of the one or more first signals/channels according to at least one of a maximum output power of the device or a maximum number of signals/channels capable of being sent by the device.

In some implementations, the transmission module 610 sends N first signals/channels in the one or more first signals/channels, where N is a maximum value that satisfies a first condition and/or a second condition, and N is a positive integer; and the N first signals/channels are part or all of the one or more first signals/channels; where
the first condition includes that: N is less than or equal to the maximum number of the signals/channels capable of being sent by the device; and
the second condition includes that: a sum of first powers corresponding to all first signals/channels in the N first signals/channels is less than or equal to the maximum output power.

In some implementations, the transmission module 610 sends at least one first signal/channel in the one or more first signals/channels, where a priority of the sent first signal/channel is higher than a priority of an unsent first signal/channel, and the unsent first signal/channel includes a first signal/channel in the one or more first signals/channels except the sent first signal/channel.

In some implementations, the transmission module 610 sends all of the first signals/channels in the one or more of the first signals/channels.

In some implementations, in a case where the maximum number of the signals/channels capable of being sent by the device does not exist or is not reported by the device, and the maximum output power of the device is greater than or equal to the sum of the first powers corresponding to all first signals/channels in the one or more first signals/channels, the transmission module 610 sends all of the first signals/channels in the one or more of the first signals/channels.

Alternatively, in a case where the maximum number of the signals/channels capable of being sent by the device is greater than or equal to a total number of the signals/channels in the one or more first signals/channels, and the maximum output power of the device is greater than or equal to the sum of the first powers corresponding to all first signals/channels in the one or more first signals/channels, the transmission module 610 sends all of the first signals/channels in the one or more first signals/channels.

In some implementations, the transmission module 610 sends part of the first signals/channels in the one or more first signals/channels.

In some implementations, in a case where the maximum number of the signals/channels capable of being sent by the device is less than the total number of the signals/channels in the one or more first signals/channels, and/or the maximum output power of the device is less than the sum of the first powers corresponding to all first signals/channels in the one or more first signals/channels, the transmission module 610 sends part of the first signals/channels in the one or more first signals/channels.

In some implementations, in a case where the maximum number of the signals/channels capable of being sent by the device does not exist or is not reported by the device, or the maximum number of the signals/channels capable of being sent by the device is greater than or equal to the total number of the signals/channels in the one or more first signals/channels, the transmission module 610 sends part or all of the one or more first signals/channels according to the maximum output power of the device and the first power corresponding to each first signal/channel in the one or more first signals/channels.

In some implementations, in a case where the maximum output power of the device is greater than or equal to the sum of the first powers corresponding to all first signals/channels in the one or more first signals/channels, the transmission module 610 sends all of the one or more first signals/channels; or
in a case where the maximum output power of the device is less than the sum of the first powers corresponding to all first signals/channels in the one or more first signals/channels, the transmission module 610 sends part of the one or more first signals/channels.

In some implementations, the transmission module 610 sends at least one first signal/channel in the one or more first signals/channels, where a priority of the sent first signal/channel is higher than a priority of an unsent first signal/channel, and the unsent first signal/channel includes a first signal/channel in the one or more first signals/channels except the sent first signal/channel; and a sum of first powers corresponding to all first signals/channels in the sent at least one first signal/channel is less than or equal to the maximum output power.

In some implementations, in a case where the maximum number of the signals/channels capable of being sent by the device is less than the total number of the signals/channels in the one or more first signals/channels, the transmission module 610 sends part or all of Pmax first signals/channels according to the maximum output power of the device and the first power corresponding to each first signal/channel in the one or more first signals/channels; where

Pmax is the maximum number of the signals/channels capable of being sent by the first device, and Pmax is a positive integer; and

a priority of any first signal/channel in the Pmax first signals/channels is higher than a priority of any first signal/channel in the one or more first signals/channels except the Pmax first signals/channels.

In some implementations, in a case where the maximum output power of the device is greater than or equal to the sum of the first powers corresponding to all first signals/channels in the Pmax first signals/channels, the transmission module 610 sends all of the Pmax first signals/channels; or
in a case where the maximum output power of the device is less than the sum of the first powers corresponding to all first signals/channels in the Pmax first signals/channels, the transmission module 610 sends part of the Pmax first signals/channels.

In some implementations, the transmission module 610 sends at least one first signal/channel in the Pmax first signals/channels, where a priority of the sent first signal/channel is higher than a priority of an unsent first signal/channel, and the unsent first signal/channel includes a first signal/channel in the Pmax first signals/channels except the sent first signal/channel; and a sum of first powers corresponding to all first signals/channels in the sent at least one first signal/channel is less than or equal to the maximum output power.

In some implementations, the transmission module 610 receives part or all of the one or more second signals/channels according to a maximum number of signals/channels capable of being received by the device.

In some implementations, the transmission module 610 sends part or all of first signals/channels in the one or more first signals/channels, where a priority of any first signal/channel in the sent first signals/channels is higher than a priority of any unsent first signal/channel, and the unsent first signal/channel includes a first signal/channel in the one or more first signals/channels except the sent first signals/channels; and the transmission module 610 receives part or all of second signals/channels in the one or more second signals/channels, where a priority of any second signal/channel in the received second signals/channels is higher than a priority of any unreceived second signal/channel, and the unreceived second signal/channel includes a second signal/channel in the one or more second signals/channels except the received second signals/channels.

Here, the priority of the signal/channel is determined by first information corresponding to the signal/channel, and the first information includes at least one of the priority of the signal/channel or a priority of a signal/channel type corresponding to the signal/channel.

In some implementations, the device has or reports the capability to simultaneously transmit and receive signals/channels.

In some implementations, the transmission module 610 sends N first signals/channels in the one or more first signals/channels, where N is a maximum value that satisfies a first condition and/or a second condition, and N is a positive integer; and the N first signals/channels are part or all of the one or more first signals/channels; where
the first condition includes that: N is less than or equal to the maximum number of the signals/channels capable of being sent by the device; and
the second condition includes that: the sum of the first powers corresponding to all first signals/channels in the N first signals/channels is less than or equal to the maximum output power of the device.

In some implementations, a number of second signals/channels received by the transmission module 610 is less than or equal to the maximum number of the signals/channels capable of being received by the device.

In some implementations, a number of signals/channels transmitted by the transmission module 610 is less than or equal to a maximum number of signals/channels capable of being transmitted by the device.

In some implementations, the first power corresponding to the first signal/channel is determined by a transmission power model corresponding to the first signal/channel.

In some implementations, the first information is agreed upon by a protocol, the first information is configured or indicated by a control node, and/or the first information is indicated by control information corresponding to a signal/channel.

In some implementations, the order of priorities of the signal/channel types includes that:
a priority of the signal/channel type used for sensing is higher than a priority of the signal/channel type used for communication, and/or
a priority of the signal/channel type used for communication and sensing is higher than the priority of the signal/channel type used for communication.

In some implementations, the order of priorities of the signal/channel types includes that:
a priority of the signal/channel type used for communication is higher than a priority of the signal/channel type used for sensing, and/or
a priority of the signal/channel type used for communication and sensing is higher than the priority of the signal/channel type used for sensing.

In some implementations, the transmission module 610 transmits a first signal/channel group in a first time domain resource set, and transmits a second signal/channel group in a second time domain resource set; the first time domain resource set is non-overlapping with the second time domain resource set; where
a signal/channel included in the first signal/channel group and a signal/channel included in the second signal/channel group are determined by the first information.

In some implementations, the first time domain resource set and the second time domain resource set are agreed upon by a protocol, and/or the first time domain resource set and the second time domain resource set are configured/indicated by a control node.

In some implementations, the first signal/channel group includes a signal/channel used for sensing, and the second signal/channel group includes a signal/channel used for communication.

The device 600 in the embodiments of the present application can implement corresponding functions of the first device in the aforementioned method embodiments. The processes, functions, embodiment methods and beneficial effects corresponding to various modules (sub-modules, units or components) in the device 600 can be found in the corresponding description in the above method embodiments, and will not be repeated here. It will be noted that the functions described in various modules (sub-modules, units or components) in the device 600 in the embodiments of the present application may be implemented by different modules (sub-modules, units or components) or by the same module (sub-module, unit or component).

FIG. 7 is a schematic block diagram of a device 700, in accordance with an embodiment of the present application. The device 700 may include:
a receiving module 710, configured to receive multiple signals/channels, the multiple signals/channels being transmitted according to first information corresponding to all signals/channels in the multiple signals/channels; where signal/channel types corresponding to the multiple signals/channels include at least one of:
a signal/channel type used for sensing;
a signal/channel type used for communication; or
a signal/channel type used for communication and sensing.

In some implementations, a signal/channel corresponding to the signal/channel type used for sensing includes at least one of:
a signal/channel used for sensing;
a reflected signal/channel corresponding to the signal/channel used for sensing;
a control signal/channel corresponding to the signal/channel used for sensing;
a measurement result feedback signal/channel corresponding to the signal/channel used for sensing; or
a sensing result feedback signal/channel corresponding to the signal/channel used for sensing.

In some implementations, the first information includes at least one of:
a priority of the signal/channel;
a priority of a signal/channel type corresponding to the signal/channel; or
time domain resource allocation information.

In this embodiment, other related functions of the device 700 may refer to the related content of the device shown in FIG. 6, which will not be described in detail here.

The device 700 in the embodiments of the present application can implement corresponding functions of the second device in the aforementioned method embodiments. The processes, functions, embodiment methods and beneficial effects corresponding to various modules (sub-modules, units or components) in the device 700 can be found in the corresponding description in the above method embodiments, and will not be repeated here. It will be noted that the functions described in various modules (sub-modules, units or components) in the device 700 in the embodiments of the present application may be implemented by different modules (sub-modules, units or components) or by the same module (sub-module, unit or component).

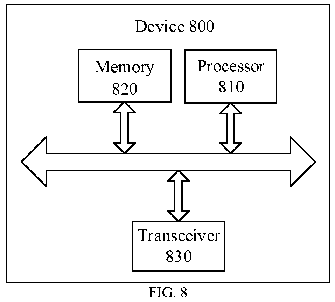

FIG. 8 is a schematic structural diagram of a device 800, in accordance with an embodiment of the present application. The device 800 includes a processor 810, and the processor 810 may call a computer program from a memory and run the computer program to enable the device 800 to implement the method in the embodiments of the present application.

In an implementation, the device 800 may further include a memory 820. The processor 810 may call and run a computer program from the memory 820, to enable the device 800 to implement the method in the embodiments of the present application.

Here, the memory 820 may be a separate device independent of the processor 810, or may be integrated into the processor 810.

In an implementation, the device 800 may further include a transceiver 830, and the processor 810 is capable of controlling the transceiver 830 to communicate with other devices, specifically, may control the transceiver 830 to send information or data to other devices, or receive information or data transmitted by other devices.

Here, the transceiver 830 may include a transmitter and a receiver. The transceiver 830 may further include an antenna, and the number of antennas may be one or more.

In an implementation, the device 800 may be a device for transmitting multiple signals/channels in the embodiments of the present application, and the device 800 may implement the corresponding processes implemented by the first device in each method of the embodiments of the present application, which will not be described in detail here for the sake of brevity. The processor 810 of the device 800 may be used to determine a method of transmitting the multiple signals/channels according to the first information corresponding to each signal/channel in the multiple signals/channels; where the signal/channel types corresponding to the multiple signals/channels include at least one of: the signal/channel type used for sensing; the signal/channel type used for communication; the signal/channel type used for communication or sensing. The transceiver 830 of the device 800 may transmit the multiple signals/channels.

In an implementation, the device 800 may be a device for receiving the multiple signals/channels in the embodiments of the present application, and the device 800 may implement the corresponding processes implemented by the second device in each method of the embodiments of the present application, which will not be described in detail here for the sake of brevity. The transceiver 830 in the device 800 may be used to receive the multiple signals/channels sent by the first device.

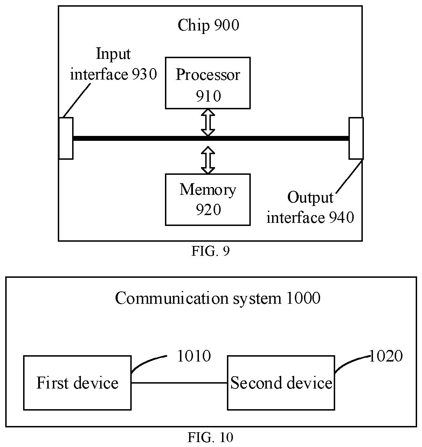

FIG. 9 is a schematic structural diagram of a chip 900, in accordance with the embodiments of the present application. The chip 900 includes a processor 910, and the processor 910 can call a computer program from a memory and run the computer program, to implement the method in the embodiments of the present application.

In an implementation, the chip 900 may further include a memory 920. Here, the processor 910 may call a computer program from the memory 920 and run the computer program, to implement the method performed by the terminal device or the network device in the embodiments of the present application.

Here, the memory 920 may be a separate device independent of the processor 910, or may be integrated into the processor 910.

In an implementation, the chip 900 may further include an input interface 930. Here, the processor 910 may control the input interface 930 to communicate with other devices or chips, and specifically, may control the input interface 930 to obtain information or data transmitted by other devices or chips.

In an implementation, the chip 900 may further include an output interface 940. Here, the processor 910 may control the output interface 940 to communicate with other devices or chips, and specifically, may control the output interface 940 to output information or data to other devices or chips.

In an implementation, the chip may be applied to the first device in the embodiments of the present application, and the chip may implement the corresponding processes implemented by the first device in each method of the embodiments of the present application, which will not be described again for the sake of brevity.

In an implementation, the chip may be applied to the second device in the embodiments of the present application, and the chip may implement the corresponding processes implemented by the second device in each method of the embodiments of the present application, which will not be described again for the sake of brevity.

The chips applied to the first device and the second device may be the same chip or different chips.

It can be understood that the chip mentioned in the embodiments of the present application may also referred to as a system-level chip, a system chip, a chip system, a system-on-chip, or the like.

The above-mentioned processor may be a general-purpose processor, a digital signal processor (DSP), a field programmable gate array (FPGA), an application specific integrated circuit (ASIC) or other programmable logic devices, transistor logic devices, discrete hardware components, or the like. The above-mentioned general-purpose processor may be a microprocessor, or may also be any conventional processor.

The above-mentioned memory may be a volatile (transitory) memory or a non-volatile (non-transitory) memory, or may include both volatile and non-volatile memories. Here, the non-volatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be random access memory (RAM).

It can be understood that the above-mentioned memory is exemplary but not restrictive. For example, the memory in the embodiments of the present application may also be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), a direct rambus random access memory (direct rambus RAM, DR RAM), or the like. That is, the memories in the embodiments of the present application are intended to include but are not limited to these and any other suitable types of memory.

FIG. 10 is a schematic block diagram of a communication system 1000, in accordance with the embodiments of the present application. The communication system 1000 includes a first device 1010 and a second device 1020.

Here, the first device is used to transmit multiple signals/channels according to first information corresponding to each signal/channel in the multiple signals/channels; where signal/channel types corresponding to the multiple signals/channels include at least one of:
a signal/channel type used for sensing;
a signal/channel type used for communication; or
a signal/channel type used for communication and sensing.

The second device is used to receive the multiple signals/channels, the multiple signals/channels are transmitted according to the first information corresponding to each signal/channel in the multiple signals/channels; where the signal/channel types corresponding to the multiple signals/channels include at least one of:
the signal/channel type used for sensing;
the signal/channel used type for communication; or
the signal/channel used type for communication and sensing.

Here, the first device 1010 may be used to implement the corresponding functions implemented by the first device in the above method, and the second device 1020 may be used to implement the corresponding functions implemented by the second device in the above method, which will not be described again for the sake of brevity.

The above embodiments may be implemented in whole or in part through software, hardware, firmware, or any combination thereof. When implemented by using a software program, the embodiments may be implemented in a form of a computer program product in whole or in part. The computer program product includes one or more computer instructions. When the computer program instruction(s) are loaded on and executed by a computer, processes or functions in accordance with the embodiments of the present application are generated in whole or in part. The computer may be a general-purpose computer, a dedicated computer, a computer network, or any other programmable device. The computer instruction(s) may be stored in a computer-readable storage medium or transmitted from a computer-readable storage medium to another computer-readable storage medium. For example, the computer instruction(s) may be transmitted from a website, computer, server or data center to another website, computer, server or data center via a wired manner (such as coaxial cable, optical fiber, or digital subscriber line (DSL)) or a wireless manner (such as infrared, radio or microwave). The computer-readable storage medium may be any available medium able to be accessed by the computer, or may be a data storage device, such as a server or data center, integrated by one or more available media. The available medium may be a magnetic medium (e.g., a floppy disk, a hard disk or a magnetic tape), an optical medium (e.g., a DVD), a semiconductor medium (e.g., a solid state drive (SSD)), or the like.

It can be understood that in the various embodiments of the present application, the magnitude of the serial numbers of the above-mentioned processes does not mean the order of execution. The execution order of each process should be determined by its function and internal logic, and should not constitute any limitation on the embodiment process of the embodiments of the present application.

Those skilled in the art can clearly understand that, for the convenience and brevity of description, the specific working processes of the systems, devices and units described above can refer to the corresponding processes in the aforementioned method embodiments, which will not be described in detail here.

The above description is only specific embodiment of the present application, but the protection scope of the present application is not limited thereto. Any person skilled in the art may readily conceive of variations or substitutions within the technical scope disclosed in the present application, which should be included within the protection scope of the present application. Therefore, the protection scope of the present application shall be subject to the protection scope of the claims.

## Claims

1. A communication method, comprising:
transmitting, by a first device, a plurality of signals/channels according to first information corresponding to each signal/channel in the plurality of signals/channels; wherein signal/channel types corresponding to the plurality of signals/channels comprise at least one of:
a signal/channel type used for sensing;
a signal/channel type used for communication; or
a signal/channel type used for communication and sensing.

2. The method according to claim 1, wherein a signal/channel corresponding to the signal/channel type used for sensing comprises at least one of:
a signal/channel used for sensing;
a reflected signal/channel corresponding to the signal/channel used for sensing;
a control signal/channel corresponding to the signal/channel used for sensing;
a measurement result feedback signal/channel corresponding to the signal/channel used for sensing; or
a sensing result feedback signal/channel corresponding to the signal/channel used for sensing.

3. The method according to claim 1 or 2, wherein the first information comprises at least one of:
a priority of the signal/channel;
a priority of a signal/channel type corresponding to the signal/channel; or
time domain resource allocation information.

4. The method according to any one of claims 1 to 3, wherein the plurality of signals/channels comprise one or more first signals/channels to be sent and one or more second signals/channels to be received;
wherein transmitting, by the first device, the plurality of signals/channels according to the first information corresponding to each signal/channel in the plurality of signals/channels, comprises:
transmitting, by the first device, the plurality of signals/channels according to first information corresponding to each signal/channel in the one or more first signals/channels and first information corresponding to each signal/channel in the one or more second signals/channels.

5. The method according to claim 4, wherein transmitting, by the first device, the plurality of signals/channels according to the first information corresponding to each signal/channel in the one or more first signals/channels and the first information corresponding to each signal/channel in the one or more second signals/channels, comprises:
sending, by the first device, part or all of the one or more first signals/channels in a case where a first priority is higher than a second priority; or
receiving, by the first device, part or all of the one or more second signals/channels in a case where the second priority is higher than the first priority;
wherein the first priority is a priority of a signal/channel with a highest priority in the one or more first signals/channels; and the second priority is a priority of a signal/channel with a highest priority in the one or more second signals/channels; and
a priority of each signal/channel in the plurality of signals/channels is determined by the first information corresponding to each signal/channel, and the first information comprises at least one of the priority of the signal/channel or a priority of a signal/channel type corresponding to the signal/channel.

6. The method according to claim 5, wherein the first device does not have or does not report a capability to simultaneously transmit and receive signals/channels.

7. The method according to any one of claims 1 to 3, wherein the plurality of signals/channels comprise a plurality of first signals/channels to be sent;
wherein transmitting, by the first device, the plurality of signals/channels according to the first information corresponding to each signal/channel in the plurality of signals/channels, comprises:
sending, by the first device, part or all of the plurality of first signals/channels according to first information corresponding to each signal/channel in the plurality of first signals/channels.

8. The method according to claim 5, 6 or 7, wherein sending, by the first device, the part or all of the one or more first signals/channels, comprises:
sending, by the first device, the part or all of the one or more first signals/channels according to at least one of a maximum output power of the first device or a maximum number of signals/channels capable of being sent by the first device.

9. The method according to claim 8, wherein sending, by the first device, the part or all of the one or more first signals/channels according to the at least one of the maximum number of the signals/channels capable of being sent by the first device or the maximum output power, comprises:
sending, by the first device, N first signals/channels in the one or more first signals/channels, wherein N is a maximum value that satisfies a first condition and/or a second condition, N is a positive integer; and the N first signals/channels are the part or all of the one or more first signals/channels; wherein
the first condition comprises that: N is less than or equal to the maximum number of the signals/channels capable of being sent by the first device; and
the second condition comprises that: a sum of first powers corresponding all of first signals/channels in the N first signals/channels is less than or equal to the maximum output power.

10. The method according to any one of claims 5 to 9, wherein sending, by the first device, the part or all of the one or more first signals/channels, comprises:
sending, by the first device, at least one first signal/channel in the one or more first signals/channels, wherein a priority of the sent first signal/channel is higher than a priority of an unsent first signal/channel, and the unsent first signal/channel comprises a first signal/channel in the one or more first signals/channels except the sent first signal/channel.

11. The method according to any one of claims 5 to 10, wherein sending, by the first device, the part or all of the one or more first signals/channels, comprises:
sending, by the first device, all of first signals/channels in the one or more first signals/channels.

12. The method according to claim 11, wherein sending, by the first device, all of the first signals/channels in the one or more first signals/channels, comprises:
sending, by the first device, all of the first signals/channels in the one or more first signals/channels, in a case where a maximum number of signals/channels capable of being sent by the first device does not exist or is not reported by the first device, and a maximum output power of the first device is greater than or equal to a sum of first powers corresponding to all first signals/channels in the one or more first signals/channels; or
sending, by the first device, all of the first signals/channels in the one or more first signals/channels, in a case where the maximum number of the signals/channels capable of being sent by the first device is greater than or equal to a total number of the signals/channels in the one or more first signals/channels, and the maximum output power of the first device is greater than or equal to the sum of the first powers corresponding to all first signals/channels in the one or more first signals/channels.

13. The method according to any one of claims 5 to 10, wherein sending, by the first device, the part or all of the one or more first signals/channels, comprises:
sending, by the first device, part of first signals/channels in the one or more first signals/channels.

14. The method according to claim 13, wherein sending, by the first device, the part of the first signals/channels in the one or more first signals/channels, comprises:
sending, by the first device, the part of the first signals/channels in the one or more first signals/channels, in a case where a maximum number of signals/channels capable of being sent by the first device is less than a total number of the signals/channels in the one or more first signals/channels, and/or a maximum output power of the first device is less than a sum of first powers corresponding to all first signals/channels in the one or more first signals/channels.

15. The method according to any one of claims 5 to 10, wherein sending, by the first device, the part or all of the one or more first signals/channels, comprises:
sending, by the first device, the part or all of the one or more first signals/channels according to a maximum output power of the first device and a first power corresponding to each first signal/channel in the one or more first signals/channels, in a case where a maximum number of signals/channels capable of being sent by the first device does not exist or is not reported by the first device, or a maximum number of the signals/channels capable of being sent by the first device is greater than or equal to a total number of signals/channels in the one or more first signals/channels.

16. The method according to claim 15, wherein sending, by the first device, the part or all of the one or more first signals/channels according to the maximum output power of the first device and the first power corresponding to each first signal/channel in the one or more first signals/channels, comprises:
sending, by the first device, all of the one or more first signals/channels, in a case where the maximum output power of the first device is greater than or equal to a sum of first powers corresponding to all first signals/channels in the one or more first signals/channels; or
sending, by the first device, the part of the one or more first signals/channels, in a case where the maximum output power of the first device is less than the sum of the first powers corresponding to all first signals/channels in the one or more first signals/channels.

17. The method according to claim 16, wherein sending, by the first device, the part of the one or more first signals/channels, comprises:
sending, by the first device, at least one first signal/channel in the one or more first signals/channels, wherein a priority of the sent first signal/channel is higher than a priority of an unsent first signal/channel, and the unsent first signal/channel comprises a first signal/channel in the one or more first signals/channels except the sent first signal/channel; and a sum of first powers corresponding to all first signals/channels in the sent at least one first signal/channel is less than or equal to the maximum output power.

18. The method according to any one of claims 5 to 10, wherein sending, by the first device, the part or all of the one or more first signals/channels, comprises:
sending, by the first device, part or all of Pmax first signals/channels according to a maximum output power of the first device and a first power corresponding to each first signal/channel in the one or more first signals/channels, in a case where a maximum number of signals/channels capable of being sent by the first device is less than a total number of signals/channels in the one or more first signals/channels; wherein
the Pmax is the maximum number of the signals/channels capable of being sent by the first device, and the Pmax is a positive integer; and
a priority of any first signal/channel in the Pmax first signals/channels is higher than a priority of any first signal/channel in the one or more first signals/channels except the Pmax first signals/channels.

19. The method according to claim 18, wherein sending, by the first device, the part or all of the Pmax first signals/channels according to the maximum output power of the first device and the first power corresponding to each first signal/channel in the one or more first signals/channels, comprises:
sending, by the first device, the all of the Pmax first signals/channels, in a case where the maximum output power of the first device is greater than or equal to a sum of first powers corresponding to all first signals/channels in the Pmax first signals/channels; or
sending, by the first device, the part of the Pmax first signals/channels, in a case where the maximum output power of the first device is less than the sum of the first powers corresponding to all first signals/channels in the Pmax first signals/channels.

20. The method according to claim 19, wherein sending, by the first device, the part of the Pmax first signals/channels, comprises:
sending, by the first device, at least one first signal/channel in the Pmax first signals/channels, wherein a priority of the sent first signal/channel is higher than a priority of an unsent first signal/channel, and the unsent first signal/channel comprises a first signal/channel in the Pmax first signals/channels except the sent first signal/channel; and a sum of first powers corresponding to all first signals/channels in the sent at least one first signal/channel is less than or equal to the maximum output power.

21. The method according to claim 5, wherein receiving, by the first device, the part or all of the one or more second signals/channels, comprises:
receiving, by the first device, the part or all of the one or more second signals/channels according to a maximum number of signals/channels capable of being received by the first device.

22. The method according to claim 4, wherein transmitting, by the first device, the plurality of signals/channels according to the first information corresponding to the one or more first signals/channels and the first information corresponding to the one or more second signals/channels, comprises:
sending, by the first device, part or all of first signals/channels in the one or more first signals/channels, wherein a priority of any first signal/channel in the sent first signals/channels is higher than a priority of any unsent first signal/channel, and the unsent first signal/channel comprises a first signal/channel in the one or more first signals/channels except the sent first signals/channels; and
receiving, by the first device, part or all of second signals/channels in the one or more second signals/channels, wherein a priority of any second signal/channel in the received second signals/channels is higher than a priority of any unreceived second signal/channel, and the unreceived second signal/channel comprises a second signal/channel in the one or more second signals/channels except the received second signals/channels;
wherein the priority of the signal/channel is determined by the first information corresponding to the signal/channel, and the first information comprises at least one of the priority of the signal/channel or a priority of a signal/channel type corresponding to the signal/channel.

23. The method according to claim 22, wherein the first device has or reports a capability to simultaneously transmit and receive signals/channels.

24. The method according to claim 22 or 23, wherein sending, by the first device, the part or all of the first signals/channels in the one or more first signals/channels, comprises:
sending, by the first device, N first signals/channels in the one or more first signals/channels, wherein N is a maximum value that satisfies a first condition and/or a second condition, and N is a positive integer; and the N first signals/channels are the part or all of the one or more first signals/channels; wherein
the first condition comprises that: N is less than or equal to a maximum number of signals/channels capable of being sent by the first device; and
the second condition comprises that: a sum of first powers corresponding to all first signals/channels in the N first signals/channels is less than or equal to a maximum output power of the first device.

25. The method according to claim 22 or 23, wherein a number of the received second signals/channels is less than or equal to a maximum number of signals/channels capable of being received by the first device.

26. The method according to claim 22 or 23, wherein a number of signals/channels transmitted by the first device is less than or equal to a maximum number of signals/channels capable of being transmitted by the first device.

27. The method according to claims 9, 12, 15 to 20, or 24, wherein the first power corresponding to the first signal/channel is determined by a transmission power model corresponding to the first signal/channel.

28. The method according to any one of claims 1 to 27, wherein the first information is agreed upon by a protocol, the first information is configured or indicated by a control node, and/or the first information is indicated by control information corresponding to the signal/channel.

29. The method according to claims 1 to 28, wherein order of priorities of the signal/channel types comprises that:
a priority of the signal/channel type used for sensing is higher than a priority of the signal/channel type used for communication; and/or
a priority of the signal/channel type used for communication and sensing is higher than the priority of the signal/channel type used for communication.

30. The method according to claims 1 to 28, wherein order of priorities of the signal/channel types comprises that:
a priority of the signal/channel type used for communication is higher than a priority of the signal/channel type used for sensing; and/or
a priority of the signal/channel type used for communication and sensing is higher than the priority of the signal/channel type used for sensing.

31. The method according to claims 1 to 3, wherein transmitting, by the first device, the plurality of signals/channels according to the first information corresponding to each signal/channel in the plurality of signals/channels, comprises:
transmitting, by the first device, a first signal/channel group in a first time domain resource set and a second signal/channel group in a second time domain resource set; the first time domain resource set being non-overlapping with the second time domain resource set; wherein
the first signal/channel group comprises at least one signal/channel in the plurality of signals/channels, the second signal/channel group comprises at least one signal/channel in the plurality of signals/channels, and the signal/channel comprised in the first signal/channel group and the signal/channel comprised in the second signal/channel group are determined by the first information.

32. The method according to claim 31, wherein the first time domain resource set and the second time domain resource set are agreed upon by a protocol, and/or the first time domain resource set and the second time domain resource set are configured/indicated by a control node.

33. The method according to claim 31 or 32, wherein the first signal/channel group comprises a signal/channel used for sensing, and the second signal/channel group comprises a signal/channel used for communication.

34. A communication method, comprising:
receiving, by a second device, a plurality of signals/channels, the plurality of signals/channels being transmitted according to first information corresponding to each signal/channel in the plurality of signals/channels; wherein signal/channel types corresponding to the plurality of signals/channels comprise at least one of:
a signal/channel type used for sensing;
a signal/channel type used for communication; or
a signal/channel type used for communication and sensing.

35. The method according to claim 34, wherein a signal/channel corresponding to the signal/channel type used for sensing comprises at least one of:
a signal/channel used for sensing;
a reflected signal/channel corresponding to the signal/channel used for sensing;
a control signal/channel corresponding to the signal/channel used for sensing;
a measurement result feedback signal/channel corresponding to the signal/channel used for sensing; or
a sensing result feedback signal/channel corresponding to the signal/channel used for sensing.

36. The method according to claim 34 or 35, wherein the first information comprises at least one of:
a priority of the signal/channel;
a priority of a signal/channel type corresponding to the signal/channel; or
time domain resource allocation information.

37. A device, comprising:
a transmission module, configured to transmit a plurality of signals/channels according to first information corresponding to each signal/channel in the plurality of signals/channels; wherein signal/channel types corresponding to the plurality of signals/channels comprise at least one of:
a signal/channel type used for sensing;
a signal/channel type used for communication; or
a signal/channel type used for communication and sensing.

38. A device, comprising:
a receiving module, configured to receives a plurality of signals/channels, the plurality of signals/channels being transmitted according to first information corresponding to each signal/channel in the plurality of signals/channels; wherein signal/channel types corresponding to the plurality of signals/channels comprise at least one of:
a signal/channel type used for sensing;
a signal/channel type used for communication; or
a signal/channel type used for communication and sensing.

39. A device, comprising a processor and a memory, wherein the memory is configured to store a computer program, and the processor is configured to call and run the computer program stored in the memory, to enable the terminal device to perform the method according to any one of claims 1 to 33 or 34 to 36.

40. A chip, comprising a processor, configured to call a computer program from a memory and run the computer program, to enable a device installed with the chip to perform the method according to any one of claims 1 to 33 or 34 to 36.

41. A computer-readable storage medium for storing a computer program that, when run by a device, enables the device to perform the method according to any one of claims 1 to 33 or 34 to 36.

42. A computer program product, comprising computer program instructions, the computer program instructions enabling a computer to perform the method according to any one of claims 1 to 33 or 34 to 36.

43. A computer program, enabling a computer to perform the method according to any one of claims 1 to 33 or 34 to 36.

44. A communication system, comprising:
a first device, configured to perform the method according to any one of claims 1 to 33; and
a second device, configured to perform the method according to claims 34 to 36.
